# EUROPÄISCHE PATENTANMELDUNG

(11) **EP 4 538 816 A1**
(43) Veröffentlichungstag der Anmeldung: **16.04.2025**
(21) Anmeldenummer: 24205868.3
(22) Anmeldetag: 10.10.2024
(51) Int. Cl.: G05B 19/423, B25J 9/16, B25J 13/08

(54) **ROBOTERARMSTEUERUNG MIT HAPTISCHER RÜCKMELDUNG AN EINEN BEDIENER BEI STEUERUNG**

(30) Priorität: 11.10.2023 DE 102023127790
(71) Anmelder: fsk industries GmbH & Co. KG, 51647 Gummersbach (DE)
(72) Erfinder: Kühle, Nils, 53340 Meckenheim (DE)
(74) Vertreter: Taruttis, Tilman

(57) **Zusammenfassung**

Roboter (1) zum Halten und Bearbeiten eines Werkstücks (2) umfassend eine Steuerung (3) zum Ansteuern einer Halteeinrichtung (4) und zum Ansteuern eines Manipulatorarms (5); und einen mehrgliedrigen Manipulatorarm (5), der ein Griffstück (6) aufweist, und wobei der Manipulatorarm (5) dazu eingerichtet ist auf das Griffstück (6) des Manipulatorarms (5) ausgeübte Kräfte zu ermitteln und entsprechende Informationen an die Steuerung (3) zu übertragen, eine mit der Steuerung (3) informativ verbundene Halteeinrichtung (4) zum Halten des Werkstücks (2), wobei die Halteeinrichtung (4) dazu eingerichtet ist das Werkstück (2) linear oder rotatorisch zu verfahren, und wobei die Steuerung (3) dazu eingerichtet ist die Halteeinrichtung (4) oder den Manipulatorarm (5) anzusteuern eine Position des Werkstücks (2) relativ zu dem Manipulatorarm (5) entsprechend der über den Manipulatorarm (5) ermittelten Kräfte linear oder rotatorisch zu verfahren; und die Steuerung (3) dazu eingerichtet ist, gleichzeitig mit der Ansteuerung der Halteeinrichtung (4) das Griffstück (6) des Manipulatorarms (5) basierend auf den über den Manipulatorarm (5) ermittelten Kräfte linear oder rotatorisch aus einer Ausgangsposition auszulenken.

## Beschreibung

Die vorliegende Erfindung betrifft eine Roboterarmsteuerung mit haptischer Rückmeldung an einen Bediener bei Steuerung.

Bekannt sind Manipulatorarme, insbesondere bei Industrierobotern, mit zugehöriger Robotersteuerung. Industrieroboter können an ihren Manipulatorarmen beispielsweise mit Werkzeugen ausgerüstet sein und dieses Werkzeug halten. Unter anderem typische Werkzeuge sind dabei Werkzeuge zur Bearbeitung von Metall, wie beispielsweise Schweiß- oder Fräs- oder Schleifköpfe.

Manipulatorarme weisen dabei gewöhnlicherweise mehrere Gliedelemente auf, die über elektrisch angetriebene Gelenke ein gehaltenes Werkzeug hinsichtlich Orientierung und Position positionieren und ansteuern können.

In der Automobilindustrie werden solche Roboter beispielsweise für automatisierte Schweißarbeiten eingesetzt, wobei die Roboter dabei Schritte eines gespeicherten Programms ausführen.

Bekannt ist auch, Industrieroboter auf Linearachsen mittels einer speicherprogrammierbaren Steuerung oder als sogenannte externe Achse in der Robotersteuerung integriert entlang einer Linearachse zu verfahren.

Es ist auch bekannt derartige Industrieroboter in Kollaboration mit einem Bedienenden als sogenannte Cobots (collaborating robot) zu betreiben. Diese Cobots unterscheiden sich von einem herkömmlichen Industrieroboter dadurch, dass sie für die direkte Interaktion von Mensch und Maschine geeignet sind. Diese Roboter können sowohl automatisierte Verfahrensschritte nach einem vorgegebenen Programm durchführen als auch direkt Verfahrensschritte durchführen, während der Roboter durch einen Bediener geführt wird. Im zweiten Fall wird der Roboter als Unterstützung für den Bediener verwendet. Der Roboter kann dann ein Werkzeug zu einem Werkstück positionieren und orientieren, wobei der Bediener den Roboter führt und ansteuert.

Der vorliegenden Erfindung liegt die Aufgabe zugrunde, für den Bediener die Steuerung des Roboters intuitiv und einfach zu gestalten.

Diese Aufgabe wird gelöst mit den Merkmalen der unabhängigen Ansprüche. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvollerweise miteinander kombinierbar und können weitere Ausgestaltungen der Erfindung definieren.

Es wird ein Roboter zum Halten und Bearbeiten eines Werkstücks vorgestellt, der eine Steuerung zum Ansteuern einer Halteeinrichtung und zum Ansteuern eines Manipulatorarms sowie einen entsprechenden mehrgliedrigen Manipulatorarm umfasst. Der Manipulatorarm weist ein Griffstück auf, wobei der Manipulatorarm dazu eingerichtet ist Kräfte zu ermitteln, die durch den Bediener auf das Griffstück des Manipulatorarms ausgeübt werden, und entsprechende Informationen an die Steuerung zu übertragen. Weiterhin umfasst der Roboter eine Halteeinrichtung zum Halten des Werkstücks oder eines Werkzeugs. In einer Ausführungsform kann die Halteeinrichtung an dem distalen Ende des Manipulatorarms angeordnet sein. In einer anderen Ausführungsform kann die Halteeinrichtung an dem proximalen Ende des Manipulatorarms angeordnet sein. Die Halteeinrichtung ist informativ mit der Steuerung verbunden und ist dazu eingerichtet, das Werkstück beispielsweise linear oder rotatorisch zu verfahren. Die Steuerung ist dazu eingerichtet die Halteeinrichtung und/oder den Manipulatorarm anzusteuern, die Position des Werkstücks relativ zu dem Manipulatorarm entsprechend der über den Manipulatorarm ermittelten Kräfte linear oder rotatorisch zu verfahren. Die Steuerung ist dazu eingerichtet, gleichzeitig mit der Ansteuerung der Halteeinrichtung das Griffstück des Manipulatorarms basierend auf den über den Manipulatorarm ermittelten Kräfte linear oder rotatorisch aus einer Ausgangsposition auszulenken. Der Ausdruck"gleichzeitig"beschreibt dabei, dass das Aufbringen einer Kraft und das dadurch bewirkte Auslenken des Manipulatorarms in der Wahrnehmung des Bedieners gleichzeitig ist, also das Auslenken zeitlich nicht merklich zum Aufbringen der Kraft unterscheidbar ist. Denn typischerweise ist die Zeit zum Übertragen von Signalen, Verarbeiten von Signalen vernachlässigbar oder subjektiv von einem Bediener nicht wahrnehmbar. Das Auslenken des Manipulatorarms aus einer vorherigen Referenz- oder Ausgangsposition endet, sobald ermittelt ist, dass keine Kraft mehr auf das Griffstück ausgeübt wird. Entsprechend ist der Manipulatorarm dann wieder in eine vorherige Ausgangs- oder Referenzposition zurückgeführt.

Der Manipulatorarm weist ein distales Ende und ein proximales Ende auf, wobei das proximale Ende mit dem Fundament oder dem Werktisch oder einer anderen geeigneten Halterung verbunden ist. Weiterhin kann der Manipulatorarm mehrere Gliedelemente umfassen, die über Gelenke und Achsen miteinander bewegbar verbunden sind. Dazu kann der Manipulatorarm Motoren, Getriebe und Winkelgeber aufweisen, welche den Manipulatorarm bewegen. Der Manipulatorarm kann weiterhin Leitungen zur Energieversorgung, Ansteuerung und Signalübertragen aufweisen.

Der Manipulatorarm weist insbesondere mindestens zwei Gliedelemente auf. Die Gliedelemente sind sequenziell miteinander über Gelenke verbunden. Die Gelenke können durch elektrische Motoren angetrieben werden, wobei ein Gelenk in mehrere Freiheitsgraden bewegt werden kann. Insbesondere kann das Gelenk einen rotatorischen Freiheitsgrad aufweisen. Besonders bevorzugt weist ein Gelenk zwei rotatorische Freiheitsgrade auf. Ein Roboter mit einem mehrgliedrigen Manipulatorarm hat den technischen Vorteil, dass aufwendigere Bewegungen möglich sind und der Manipulatorarm sein distales Ende auch an Stellen des Werkstücks positionieren und orientieren kann, die sonst nur schwer oder gar nicht zu erreichen sind.

Das Werkstück kann aus einem beliebigen Material sein. Es kann beispielsweise metallisch oder mineralisch sein, bevorzugt kann das Werkstück ein Kunststoff sein, und besonders bevorzugt kann das Werkstück eine Mischung verschiedener Materialien sein.

Bearbeiten bedeutet, dass ein Werkzeug zum Werkstück geführt wird und das Werkstück mit dem Werkzeug bearbeitet wird. Bearbeiten kann auch bedeuten, dass ein Werkstück zum Werkzeug geführt wird und das Werkstück mit dem Werkzeug bearbeitet wird. Insbesondere kann an dem Werkstück etwas befestigt werden und/oder entfernt werden. Hierfür können bekannte Fertigungsverfahren verwendet werden. Bearbeiten kann auch bedeuten, dass das Werkstück positioniert wird oder vermessen wird.

Der Manipulatorarm weist ein Griffstück auf, welches typischerweise so an seinem distalen Ende angeordnet ist, dass es nah an dem Werkzeug angeordnet ist, welches am Ende des Manipulatorarms angeordnet werden kann. Ein Bediener kann den Manipulatorarm mittels des Griffstücks steuern. Hierfür kann der Bediener das Griffstück umgreifen und eine Kraft auf das Griffstück ausüben, beispielsweise in eine Richtung.

Das Griffstück kann auch ein jeglicher Bereich des Manipulatorarms sein, welcher dazu geeignet und vorgesehen ist, dass ein Bediener dieses ergreift, um eine Kraft auf den Manipulatorarm auszuüben, der nicht notwendigerweise ergonomisch ausgeformt ist. Bevorzugt ist das Griffstück oder der Griffbereich ein Bereich am distalen Ende des Manipulatorarms. In einer alternativen Ausführungsform ist das Griffstück ein Bereich des Werkzeugs.

Der Manipulatorarm ist dazu eingerichtet auf das Griffstück des Manipulatorarms ausgeübte Kräfte zu ermitteln und entsprechende Informationen an die Steuerung zu übertragen. Eine Kraft kann dabei auch ein Drehmoment um eine Rotationsachse sein. Der Manipulatorarm hält zunächst seine Pose und/oder die Position. Eine Pose des Manipulatorarms meint dabei, dass sich die mehreren Gliedelemente des Manipulatorarms sich zueinander nicht bewegen und dadurch die momentane Form des Manipulatorarms sich nicht ändert, abgesehen von einer Auslenkung des Griffstücks aus einer Ausgangsposition. Die Kraft des Bedieners am Griffstück wird dann auf den Manipulatorarm übertragen. Zur Messung der Kraft ist am/im Manipulatorarm ein dazu geeigneter Sensor, in einer Ausführungsform eine Kraftmesserdose, auch Kraftaufnehmer, oder Kraftsensor genannt, angebracht, welche die auf das Griffstück des Manipulatorarms ausgeübte Kräfte ermittelt und entsprechende Informationen an die Steuerung überträgt. In einer anderen Ausführungsform kann ein geeigneter Sensor die Kräfte an den Gelenken des Manipulatorarms messen.

Eine Kraft am Griffstück kann vektoriell in verschiedene Orientierungen zerlegt werden. Dabei ist es vorteilhaft, die Kräfte drei zueinander orthogonalen Richtungen zuzuordnen. Insbesondere kann die Orientierung einer Kraft entlang einer linearen Bewegungsachse des Roboters zugeordnet werden.

Eine möglicherweise ungewünschte Bewegungsrichtung des Manipulatorarms kann sofort als Kraft am Griffstück registriert werden und entsprechend an die Steuerung übertragen werden. Ein Bediener kann, wie unten beschrieben, durch eine entsprechende Eingabe an die Steuerung vorgeben, dass nur vorgegebene Richtungen einer Kraft für die Ansteuerung der Halteeinrichtung oder des Manipulatorarms berücksichtigt werden sollen.

Auf diese Weise können die Kräfte und Kräfteänderungen des Bedieners am Griffstück dediziert ermittelt werden, sodass beispielsweise eine Kraft in zwei Richtungen vektoriell zerlegt wird. Auf diese Weise kann beispielsweise eine Kraft in einer Richtung ignoriert werden, die zu einer Bewegung des Manipulatorarms oder des Werkstücks führen würde, die unerwünscht ist. Das kann die Sicherheit in der Interaktion zwischen Menschen und Maschine erhöhen.

Eine ermittelte Kraft kann sowohl für die Ansteuerung der Halteeinrichtung verwendet werden, um diese in eine gewünschte Richtung zu bewegen oder zu rotieren, als auch für die Ansteuerung des Manipulatorarms verwendet werden, um diesen entsprechend der ermittelten Kraft aus einer Ausgangsposition zu bewegen und dem Bediener eine haptische Rückmeldung zu geben. Der Bediener kann damit nicht nur sehen, dass seine auf das Griffstück ausgeübte Kraft ein entsprechendes Verfahren des Werkstücks bewirkt, sondern erhält auch ein haptisches "Feedback".

Die Steuerung ist dazu informativ mit der Halteeinrichtung verbunden, sodass die Steuerung Anweisungen zur Steuerung an die Halteeinrichtung übertragen kann. Die Halteeinrichtung ist dabei zum Halten des Werkstücks eingerichtet, wobei die Halteeinrichtung zum linearen oder rotatorischen Verfahren des Werkstücks eingerichtet ist. Der Bediener kann das Griffstück beispielsweise von sich wegdrücken oder zu sich hinziehen, um das Werkstück zu rotieren, wobei die Geschwindigkeit der Rotation mit zunehmender Druck- oder Zugkraft zunimmt und endet, sobald der Bediener keine Druck- oder Zugkraft mehr auf das Griffstück ausübt, und wobei gleichzeitig die Steuerung den Manipulatorarm in Abhängigkeit von der Größe der Druck- oder Zugkraft so ansteuert, dass das Griffstück in Abhängigkeit der Kraft aus der ursprüngliche Ausgangsposition auslenkt wird. Dementsprechend steuert die Steuerung den Manipulatorarm so an, dass das Griffstück bei abnehmender Kraft in die Ausgangsposition zurückkehrt.

Die Halteeinrichtung kann dabei zumindest eine Rotationsachse aufweisen, um welche das Werkstück gedreht werden kann. Die Halteeinrichtung kann aber auch zumindest eine Linearachse aufweisen, entlang derer das Werkstück linear verfahren werden kann. Hierfür kann die Halteeinrichtung elektrische lineare und/oder rotatorische Antriebe aufweisen.

Weiterhin kann der Bediener am Griffstück eine Kraft ausüben, um den Manipulatorarm in einer an sich starren Pose entlang einer Linearachse in die der Kraftrichtung entsprechenden Richtung zu verfahren. Eine starre Pose ist dabei eine solche, die lediglich ein Auslenken des Griffstücks ermöglicht, solange eine Kraft auf das Griffstück ausgeübt wird. Der Bediener kann damit beispielsweise das Griffstück zur Seite drücken und dadurch den Manipulatorarm in einer ansonsten starren Pose entlang einer Linearachse in die entsprechende Richtung verfahren, wobei das Griffstück während des Verfahrens ausgelenkt ist.

Die Ausgangsposition ist eine relative Position des Griffstücks bezogen auf eine starre Pose des Manipulatorarms. Die Ausgangs- oder Referenzposition kann auch als Ruhelage bezeichnet werden. In anderen Worten kann die Ausgangsposition auch vereinfacht mit Vektoren beschrieben werden. Von einem Koordinatenursprung ausgehend kann das proximale Ende des Manipulatorarms als ein Ortsvektor beschrieben werden. Dieser Ortsvektor kann verändert werden, indem beispielsweise der Manipulatorarm auf einer Linearachse verschoben wird. Ein Griffstückvektor bezeichnet einen Vektor von dem proximalen Ende des Manipulatorarms auf das Griffstück. Ist der Manipulatorarm in einer starren Pose, so ist der Griffstückvektor die Auslenkung.

Das Griffstück des Manipulatorarms kann in der starren Pose des Manipulatorarms entlang einer erlaubten Auslenkungsstrecke ausgelenkt werden und/oder entlang eines erlaubten Drehwinkels verdreht werden. Die lineare oder rotatorische Verfahrbewegung der starren Pose des Manipulatorarms oder der Halteeinrichtung kann umso schneller ausgeführt werden, desto größer die auf das Griffstück ausgeübte Kraft ist. Da eine größere Kraft auf das Griffstück typischerweise eine entsprechend größere Auslenkung des Griffstücks bewirkt, wird auch das Griffstück entlang der erlaubten Auslenkungsstrecke aus der Ausgangsposition weiter ausgelenkt.

Der Bediener des Roboters erhält damit gleichzeitig mit der Ansteuerung der Halteeinrichtung am Griffstück des Manipulatorarms ein haptisches Feedback auf die von ihm ausgeübte Kraft.

Auf diese Weise kann ein Werkzeug besonders einfach geführt und relativ zu einem Werkstück positioniert werden. Weiterhin ist die Interaktion zwischen Menschen und Roboter durch die haptische Rückmeldung intuitiv. Dies erleichtert das Steuern des Roboters und erhöht gleichzeitig die Sicherheit bei der Bedienung.

In einer Ausführungsform ist der Roboter als Cobot (collaborativ roboter) ausgeführt. Cobots können automatisierte Verfahrensschritte nach einem vorgegebenen Programm durchführen als auch direkt Verfahrensschritte durchführen, während der Cobot durch einen Bediener geführt wird. Im zweiten Fall wird der Cobot als Unterstützung für den Bediener verwendet. Ein Cobot hat den Vorteil, eine besonders sichere Zusammenarbeit mit einem Bediener zu ermöglichen.

In einer weiteren Ausführungsform des Roboters ist der mehrgliedrige Manipulatorarm an seinem distalen Ende zur Aufnahme eines Werkzeugs zur Bearbeitung des Werkstücks eingerichtet.

Das Werkzeug kann in distaler Richtung des Manipulatorarms an das Griffstück des Manipulatorarms angrenzen, sodass in distaler Richtung das Griffstück das letzte Element des Manipulatorarms vor dem Werkzeug ist. Ein Werkzeug kann ein Schweißwerkzeug und/oder ein Trennwerkzeug sein, bevorzugt ein Positionierwerkzeug sein oder besonders bevorzugt ein Vermessungswerkzeug sein.

In einer weiteren Ausführungsform des Roboters ist das Auslenken des Manipulatorarms basierend auf den über das Griffstück des Manipulatorarm ermittelten Kräfte nichtlinear.

Die Auslenkung des Griffstücks des Manipulatorarms kann in einer Ausführungsform zu einer ermittelten ausgeübten Kraft nichtlinear zunehmen, sodass eine doppelt so große Kraft nicht die doppelte, sondern nur eine geringere Auslenkung des Manipulatorarms erzeugt. Insbesondere kann die Weglänge der Auslenkung des Manipulatorarms logarithmisch zur ermittelten Kraft sein. So kann in einer Ausführungsform die Wegstrecke der Auslenkung für eine vierfache Kraft nur doppelt so groß sein.

Die Steuerung kann dementsprechend dazu eingerichtet sein, ein Werkstück entlang einer geraden Achse zu verfahren oder um eine Achse zu rotieren, wobei die Verfahr- oder Rotationsgeschwindigkeit abhängig ist von der Größe der ermittelten Kraft ist.

In einer Ausführungsform ist die Verfahr- oder Rotationsgeschwindigkeit des Werkstücks linear zur Größe der ermittelten Kraft, sodass eine doppelt so große Kraft eine entsprechende doppelte Verfahr- oder Rotationsgeschwindigkeit bewirkt.

In einer anderen Ausführungsform kann die Verfahr- oder Rotationsgeschwindigkeit des Werkstücks nichtlinear zur Größe der ermittelten Kraft zunehmen, sodass beispielsweise eine zweifache Kraft eine vierfache Verfahr- oder Rotationsgeschwindigkeit bewirkt.

Die nichtlineare Zunahme der Verfahr- oder Rotationsgeschwindigkeit des Werkstücks bei einer Zunahme der ermittelten Kraft auf das Griffstück ermöglicht ein vergleichsweise schnelles Verfahren bzw. Rotieren des Werkstücks, wenn eine große Kraft auf das Griffstück ausgeübt und ermittelt wird und umgekehrt ein langsameres Verfahren bzw. Rotieren, wenn eine kleinere Kraft ermittelt wird. Dies ermöglicht einem Bediener ein exaktes Positionieren des Werkstücks bei geringen Verfahr- oder Rotationsgeschwindigkeiten und ein überproportional schnelles Verfahren bzw. Rotieren des Werkstücks, wenn der Bediener größere Kräfte auf das Griffstück ausübt.

In einer Ausführungsform ist das Auslenken des Manipulatorarms basierend auf den über das Griffstück des Manipulatorarms ermittelten Kräfte linear zu der ermittelten Kraft.

Die Steuerung kann dann dazu eingerichtet sein, eine Position des Werkstücks entsprechend der über den Manipulatorarm ermittelten linearen Zunahme der Kräfte linear oder rotatorisch mit der ermittelten Kraft entsprechenden linear zunehmenden Geschwindigkeit zu verfahren. Vorteilhaft ist, dass die Steuerung des Roboters intuitiver wird mit einer eindeutigen haptischen Rückmeldung an den Bediener. So haben stärkere Bewegungen am Griffstück proportionale Bewegungen des Manipulatorarms und/oder der Halteeinrichtung zur Folge, ohne dass bei großen Kräften überproportional große Verfahr- oder Rotationsgeschwindigkeiten erreicht werden. Diese Ausführungsform ist besonders für ungeübte Bediener vorteilhaft, da der Roboter sich proportional zur ausgeübten Kraft des Bedieners verhält.

In einer Ausführungsform ist der Manipulatorarm an seinem proximalen Ende relativ zur Halteeinrichtung lösbar festgelegt. Beispielsweise kann der Manipulatorarm auf einer elektrisch angetriebenen Linearachse entlang der Linearachse verfahrbar sein. Der Manipulatorarm kann dadurch entlang zumindest einer Achse bewegbar sein.

Der Manipulatorarm kann auch entlang mehrerer, zueinander orthogonaler Achsen bewegbar sein. Bevorzugt kann das proximale Ende des Manipulatorarms auf einem elektrisch angetriebenen horizontalen Lineartisch entlang zweier orthogonaler Achsen verfahrbar sein. Besonders bevorzugt ist das proximale Ende des Manipulatorarms zusätzlich entlang der vertikalen dritten Achse mit einer Hubeinrichtung verfahrbar. Auf diese Weise erhält der Roboter eine größere Bearbeitungsreichweite, ohne dem Manipulatorarm weitere Gliedelemente hinzuzufügen. Weiterhin kann bei der Mensch- Maschine-Interaktion der Roboter dem Bewegungsraum des Bedieners besser folgen.

In einer weiteren bevorzugten Ausführungsform werden vorherigen Ausführungsformen mit diesem Merkmal kombiniert, sodass ein Bediener eine Kraft auf das Griffstück ausübt und die Steuerung das proximale Ende des Roboterarms entsprechend der ausgeübten Kraft verfährt. Dabei ist vorteilhaft, dass der Bediener den Roboter intuitiv mit haptischer Rückmeldung bei Steuerung verwenden kann und eine größere Bearbeitungsreichweite genutzt werden kann

In einer Ausführungsform weist der Roboter einen Schalter auf. Der Bediener kann durch Betätigung eines Schalters oder einer Kombination von Schalterbetätigungen auswählen, entlang welcher Achse ein Werkstück verfahren oder um welche Achse ein Werkstück rotiert oder das proximale Ende des Manipulatorarms verfahren werden soll, wenn der Bediener eine Kraft in einer vordefinierten Richtung auf das Griffstück ausübt.

Bevorzugt weist der Roboter dazu einen oder mehrere Druckschalter oder Taster am Griffstück auf, die ein Bediener beim Umfassen des Griffstücks bedienen kann.

In einer Ausführungsform kann der Bediener durch entsprechenden Tastendruck auswählen, ob bei einem Druck auf das Griffstück das Werkstück in die Richtung des Drucks entlang einer Linearachse verfahren oder das Werksstück um eine Rotationsachse rotiert werden soll. Durch das Betätigen verschiedener Tastenkombinationen kann der Bediener so auswählen, entlang welcher Achse ein Werkstück linear verfahren oder rotiert wird oder das proximale Ende des Roboters verfahren oder rotiert wird.

Ein weiterer Aspekt der Erfindung ist ein Verfahren zur Steuerung des Roboters. Das Verfahren umfasst die Schritte:
a) Ermitteln von auf das Griffstück des Manipulatorarms ausgeübten Kräften,
b) Übertragen entsprechender Informationen an die Steuerung,
c) Halten des Werkstücks in der Halteeinrichtung,
d) Ansteuern der Halteeinrichtung oder des Manipulatorarms eine Position des Werkstücks relativ zu dem Manipulatorarm entsprechend der über den Manipulatorarm ermittelten Kräfte linear oder rotatorisch zu verfahren,
e) rotatorisches oder lineares Auslenken des Griffstücks des Manipulatorarms gleichzeitig mit dem Ansteuern der Halteeinrichtung basierend auf den ermittelten Kräften aus einer Ausgangsposition.

Typischerweise betätigt ein Bediener einen Schalter an dem Roboter, in einer Ausführungsform einen Taster, bevor er eine Kraft auf das Griffstück ausübt, um der Steuerung anzuzeigen, dass eine nachfolgend auf das Griffstück ausgeübte Kraft ermittelt und für ein Verfahren der Halteeinrichtung oder des Manipulatorarms verwendet werden soll.

Das Auslenken des Manipulatorarms aus einer vorherigen Ausgangsposition endet, sobald ermittelt wird, dass keine Kraft mehr auf das Griffstück ausgeübt wird. Entsprechend ist der Manipulatorarm dann wieder in eine vorherige Ausgangsposition zurückgeführt, wenn die Halteeinrichtung zum Verfahren angesteuert wurde. Falls die Position des Manipulatorarms verfahren wurde, so verbleibt das proximale Ende des Manipulatorarms an seiner neuen Position, jedoch endet das Auslenken des Griffstücks, sobald keine Kraft mehr auf das Griffstück ausgeübt wird. Der Bediener kann dabei über verschiedene Tasten bzw. Betätigungen der Steuerung signalisieren, ob der Manipulatorarm oder die Halteeinrichtung verfahren werden soll oder entlang welcher Achsen das Werkstück oder der Manipulatorarm verfahren oder rotiert werden soll..

Ein Bediener erhält über die Auslenkung des Griffstücks eine haptische Rückmeldung über die ausgeübte Kraft auf das Griffstück d.h. ein Feedback, sodass ein Steuern des Roboters intuitiv und einfach ist. Ein Werkstück kann dadurch einfach positioniert und orientiert werden.

Das Verfahren zum Steuern eines Roboters mit entsprechenden Programmbefehlen kann als Software implementiert sein. Die Software kann als ausführbares Programm von der Steuerung des Roboters ausgeführt werden und den Roboter entsprechend steuern.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine perspektivische Ansicht eines erfindungsgemäßen Roboters zum Halten und Bearbeiten eines Werkstücks,
- Fig. 2:: eine perspektivische Ansicht eines erfindungsgemäßen Roboters aus Fig. 1,
- Fig. 3:: eine perspektivische Ansicht eines weiteren erfindungsgemäßen Roboters zum Halten und Bearbeiten eines Werkstücks vor einer linearen Verschiebung,
- Fig.4:: eine perspektivische Ansicht eines erfindungsgemäßen Roboters aus Fig. 3,
- Fig.5:: eine perspektivische Ansicht eines Griffstücks eines Manipulatorarms aus Fig. 1 bis Fig. 4.

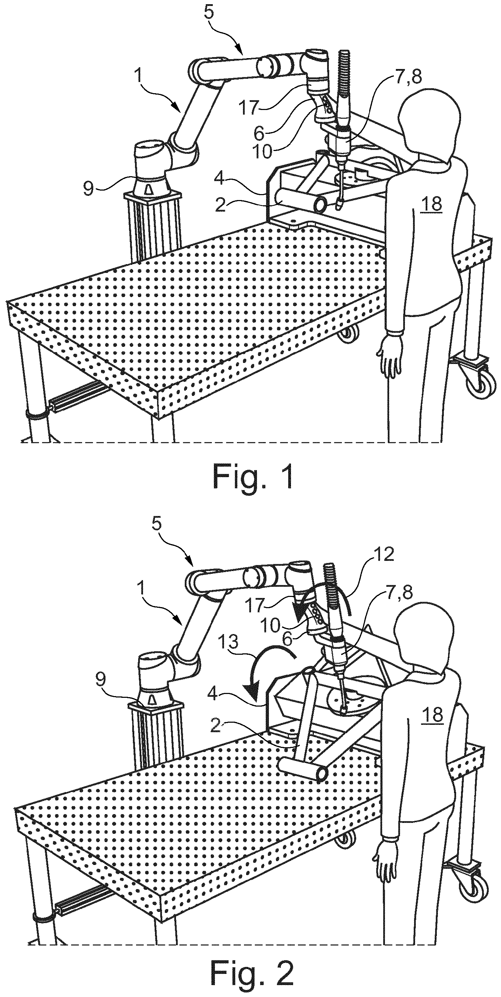

Fig. 1 zeigt eine perspektivische Ansicht eines erfindungsgemäßen Roboters 1 zum Halten und Bearbeiten eines Werkstücks 2, der von einem Bediener 18 bedient wird.

Der Roboter 1 umfasst einen mehrgliedrigen Manipulatorarm 5, eine Halteeinrichtung 4 und eine Steuerung. Der Roboter 1 ist ein Cobot und für die Mensch-Maschine-Interaktion geeignet.

In dieser und den weiteren Figuren ist die Steuerung nicht dargestellt. Die Steuerung erhält Informationen von dem Manipulatorarm, insbesondere Messwerte zur Position und zu Kräften, die auf den Manipulatorarm wirken und steuert diesen sowie die Halteeinrichtung 4.

Die Halteeinrichtung 4 ist dazu eingerichtet und vorgesehen ein vom Roboter 1 zu bearbeitendes Werkstück 2 zu halten. Die Steuerung steuert die Halteeinrichtung 4 entsprechend an, sodass die Halteeinrichtung 4 das Werkstück entlang einer linearen Achse verfährt oder um eine Achse rotiert, also die Pose des Werkstücks relativ zum Manipulatorarm 5 ändert, wie es für die Bearbeitung mit einem Werkzeug nötig ist.

Der Manipulatorarm 5 ist an seinem proximalen Ende 9 relativ zur Halteeinrichtung 4 festgelegt. An seinem distalen Ende 7 ist der Manipulatorarm zur Aufnahme eines Werkzeugs 8 eingerichtet. Mit dem Werkzeug 8 kann der Roboter 1 das Werkstück 2 bearbeiten, welches in der Halteeinrichtung 4 gehalten ist.

Der Manipulatorarm 5 weist ein Griffstück 6 auf. Der Manipulatorarm 5 umfasst Motoren und Antriebe, um die Glieder des Manipulatorarms 5 zu verfahren oder zu rotieren. Weiterhin umfasst der Manipulatorarm 5 Sensoren und ist dazu eingerichtet von einem Bediener 18 auf das Griffstück 6 des Manipulatorarms 5 ausgeübte Kräfte zu ermitteln und entsprechende Informationen an die Steuerung zu übertragen. Die Kräfte können dabei entlang einer linearen Achse sein, d.h. wenn ein Bediener ein Kraft in einer gerade Richtung ausübt, beispielsweise wenn er eine Kraft zu einer Seite auf das Griffstück 6 und damit den Manipulatorarm 5 ausübt, also beispielsweise das Griffstück 6 von sich weg nach hinten drückt oder zu sich heranzieht. Die Richtung der Kraft kann dabei auch vertikal gerichtet sein, also nach oben oder unten.

Alternativ kann eine Kraft rotatorisch sein, wenn also ein Bediener 18 ein Moment auf das Griffstück 6 ausübt, d.h. das Griffstück 6 um seine Mittelachse zu drehen versucht.

Der Roboter 1 lässt dabei zu, dass das Griffstück 6 in Richtung der ausgeübten linearen oder rotatorischen Kraft ausgelenkt wird. In einer Ausführungsform kann das Auslenken dadurch erfolgen, dass der Manipulatorarm 5 nicht vollständig starr, sondern flexibel gestaltet ist, wobei der Manipulatorarm 5 in seine entsprechende Ausgangsposition zurückkehrt, sobald die auslenkende Kraft nicht mehr ausgeübt wird.

In einer alternativen Ausführungsform steuert die Steuerung des Roboters die Stellantriebe und Motoren des Manipulatorarms 5 so an, dass das Griffstück 6 entsprechend der ermittelten Kraft aus seiner Ausgangsposition ausgelenkt wird. Dementsprechend ist das Griffstück wieder zurück in seine Ausgangsposition zurückgefahren, sobald der Bediener 18 die Kraft auf das Griffstück 6 nicht mehr ausübt, In dieser Ausführungsform steuert die Steuerung des Roboters 1 die Wegstrecke oder den Rotationswinkel der Auslenkung linear oder nichtlinear zur ermittelten Kraft an.

Bei einer Auslenkung proportional zur ermittelten Kraft ist die Länge der Wegstrecke oder der Rotationswinkel der Auslenkung direkt proportional zu der auf das Griffstück 6 ermittelten Kraft (lineare Zuordnung von Kraft zu Wegstrecke/Rotationswinkel). Bei einer doppelt so großen Kraft ist die Wegstrecke bzw. der Rotationswinkel der Auslenkung entsprechend doppelt so groß. Die Zuordnung von Wegstrecke bzw. Rotationswinkel zu einer ermittelten Kraft kann in einer weiteren Ausführungsform auch nicht proportional sein, sodass eine größere Kraft zwar einen größeren Auslenkweg oder Rotationswinkel bewirkt, die Zuordnung von Kraft zu Wegstrecke bzw. Rotationswinkel jedoch nicht linear ist. Mit einer solchen nicht proportionalen Ansteuerung kann die Steuerung die Wegstrecke der Auslenkung oder den Rotationswinkel so ansteuern, dass für die doppelte Wegstrecke der Auslenkung bzw. einen doppelt so großen Rotationswinkel viermal die ermittelte Kraft an dem Griffstück 6 anliegen muss.

Die Steuerung ist informativ, d.h. zum Austausch von ermittelten Information und Steueranweisungen, mit der Halteeinrichtung 4 verbunden. Die Halteeinrichtung 4 ist dazu eingerichtet das Werkstück 2 linear oder rotatorisch zu verfahren.

Die Steuerung ist dazu eingerichtet die Halteeinrichtung 4 und/oder den Manipulatorarm 5 anzusteuern. Dazu kann die Steuerung Steueranweisungen an die Halteeinrichtung 4 senden, sodass diese eine Position des Werkstücks 2 relativ zu dem Manipulatorarm 5 linear oder rotatorisch verfährt. Die Steuerung ist dazu eingerichtet, gleichzeitig mit der Ansteuerung der Halteeinrichtung 4 das Griffstück 6 des Manipulatorarms 5 ebenso basierend auf den über den Manipulatorarm 5 ermittelten Kräfte linear oder rotatorisch aus einer Ausgangsposition auszulenken.

Der Manipulatorarm 5 ist an seinem distalen Ende 7 dazu vorgesehen und eingerichtet ein Werkzeug 8 zu halten oder aufzunehmen, mit dem das Werkstück 2 bearbeitet werden kann. Das Auslenken des Manipulatorarms 5, d.h. der Weg der Auslenkung, in einer Ausführungsform ist nicht proportional zu den auf den Manipulatorarm 5 ausgeübten und ermittelten Kräfte.

Fig. 2 zeigt eine perspektivische Ansicht eines erfindungsgemäßen Roboters 1 aus Fig. 1. Der Roboter 1 wird durch folgende Schritte gesteuert, so dass die Halteeinrichtung 4 das Werkstück 2 rotiert. Der Bediener 18 ergreift das Griffstück 6 und betätigt einen Schalter oder Drucktaster 10 des Griffstücks 6. Das Betätigen des Schalters oder Drucktasters 10 signalisiert der Steuerung, dass eine nachfolgend auf das Griffstück 6 ausgeübte Kraft ermittelt und entsprechend der Betätigung eines Drucktasters zu verarbeiten ist. Das Griffstück 6 kann dazu einen oder mehrere Drucktaster 10 aufweisen. Die Steuerung ist dazu eingerichtet, für verschiedene Drucktaster 10 oder während/ nach Betätigungen eines oder mehrerer Drucktaster 10 die nachfolgend ermittelten Kraft zu verarbeiten, d.h. sowohl das Auslenken des Manipulatorarms 5 als auch das Ändern der Pose des Manipulatorarms 5 zu steuern. Dabei kann in einer Ausführungsform mittels einer vordefinierten Abfolge von Drucktasterbetätigungen ausgewählt werden, dass eine nachfolgende Kraft auf das Griffstück 6 für eine bestimmte

Bewegung gelten soll. Ein Bediener kann so auswählen, dass die Steuerung eine nachfolgende Eingabe nur für eine ausgewählte Bewegung verarbeiten soll, beispielsweise eine bestimmte lineare Bewegung oder eine bestimmte Rotation um eine bestimmte Achse. Auf diese Weise werden Kräfte, die der Bediener 18 in einer anderen als der ausgewählten Richtung auf das Griffstück 6 ausübt, nicht berücksichtigt.

Fig. 2 zeigt einen Bediener 18, der eine Kraft auf das Griffstück 6 ausübt, hier eine Rotationskraft, siehe Pfeil 12. Die Sensoren des Manipulatorarms 5 ermitteln die Kraft, und der Manipulatorarm 5 signalisiert entsprechende Informationen an die Steuerung. Daraufhin steuert die Steuerung sowohl die Halteeinrichtung 4 als auch den Manipulatorarm 5 entsprechend an, sodass die Halteeinrichtung 4 das Werkstück 2 verfährt, siehe Pfeil 13, und gleichzeitig das Griffstück 6 auslenkt.

Wie in Fig. 2 gezeigt wird das Griffstück 6 mit einer Kraft entlang einer ersten Drehbewegung 12 aus der Ausgangslage ausgelenkt. Die Halteeinrichtung 4 verfährt rotatorisch in einer zweiten Drehbewegung 13, solange bis sich das Griffstück 6 zurück in der Ausgangsposition befindet. Solange also der Bediener 18 über die Drehbewegung eine entsprechende Kraft auf das Griffstück ausübt, verfährt die Halteeinrichtung 4 das Werkstück 2.

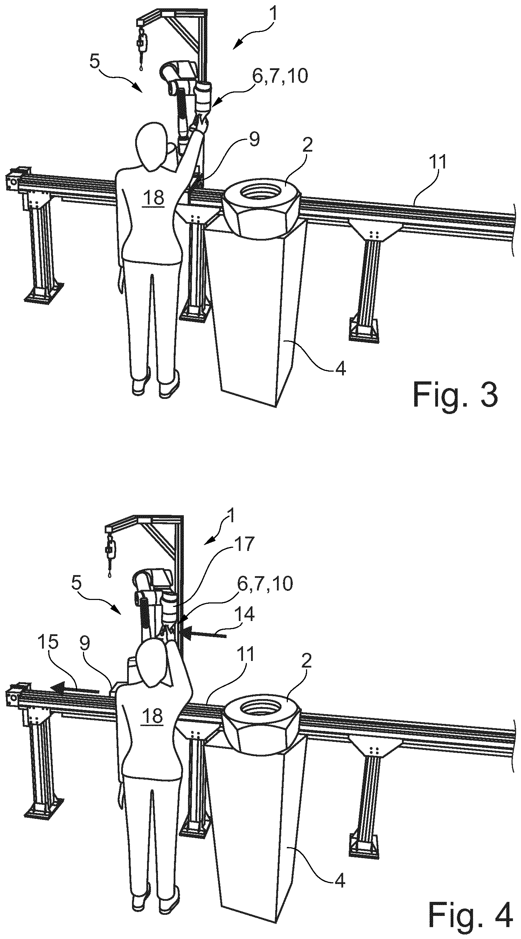

Figuren 3 und 4 zeigen eine perspektivische Ansicht eines Manipulatorarms 5 eines erfindungsgemäßen Roboters 1, wobei der Manipulatorarm 5 entlang einer geradlinigen Führung 11 verfahren werden kann. Analog zu dem nachfolgend beschriebenen Verfahren des Manipulatorarms eines Roboters 1 entlang einer geradlinigen Führung, kann ein Manipulatorarm 5 auch relativ zu der Werkbank oder dem Fundament rotieren, an dem er mit seinem proximalen Ende 9 festgelegt ist.

Fig. 3 zeigt den Manipulatorarm 5 und das Griffstück 6 in der Ausgangslage, also vor dem Verfahren des Manipulatorarms 5. Der Bediener 18 betätigt einen oder mehrere Drucktaster 10 des Griffstücks 6 vor oder während des nachfolgenden Verfahrvorgangs, sodass der Steuerung signalisiert wird, dass die nachfolgende Bedienung auf ein Verfahrvorgang des Manipulatorarms 5 gerichtet ist. Die Steuerung wird dementsprechend die nachfolgend, siehe Fig. 4, am Griffstück 6 ermittelten Kräfte einem Verfahrvorgang des Manipulatorarms 5 zuordnen.

Wie in Fig. 4 dargestellt übt ein Bediener 18 im Anschluss an das Betätigen eines Drucktasters 10 eine zur Seite gerichtete Kraft, siehe Pfeil 14, auf das Griffstück 6 des Manipulatorarms 5 aus. Analog zu dem oben beschriebenen ermitteln die Sensoren 17 die Richtung und Größe der ausgeübten Kraft und senden entsprechende Informationen an die Steuerung. Die Steuerung steuert den Roboter 1 an, den Manipulatorarm 5 in Richtung der Kraft 14 zu verfahren, siehe Pfeil 15. Die Geschwindigkeit des Verfahrens des Manipulatorarms 5 ist dabei abhängig von der Kraft, die der Bediener 18 auf das Griffstück 6 ausgeübt hat. Gleichzeitig mit dem Verfahren des Manipulatorarms 5 steuert die Steuerung 3 den Manipulatorarm 5 an das Griffstück 6 entsprechend der ausgeübten Kraft auszulenken. In diesem Fall kann Auslenken des Griffstücks 6 ein Bewegen des Griffstücks 6 relativ zum Manipulatorarm 5 sein.

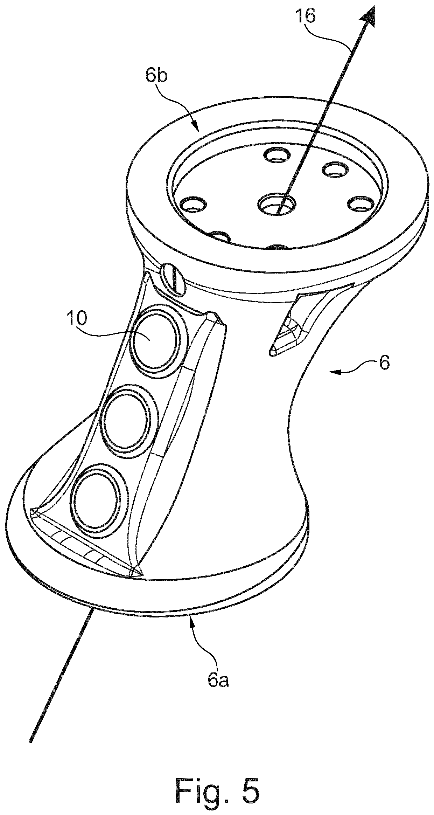

Fig. 5 zeigt eine perspektivische Ansicht eines Griffstücks 6, der in den Fig. 1 bis Fig. 4 gezeigt ist. Das Griffstück 6 ist an dem Manipulatorarm befestigt, wobei das Griffstück 6 bezogen auf den Manipulatorarm verkröpft an dem Manipulatorarm platziert ist. Die Montageflächen 6a, 6b des Griffstücks sind parallel, jedoch sind die Flächennormalen nicht parallel zur Achse 16 des Griffstücks. Im montierten Zustand ist das Griffstück 6 damit ergonomisch in dem Manipulatorarm angeordnet, sodass auch die Drucktaster 10 ergonomisch angeordnet sind. Dabei kann das Griffstück 6 in einer Ausführungsform einen oder mehrere Drucktaster auf der einen, hier sichtbaren Seite des Griffstücks 6 aufweisen und mindestens einen weiteren Schalter oder Drucktaster auf der gegenüberliegenden, hier nicht sichtbaren Seite des Griffstücks 6 aufweisen.

Typischerweise ist das Griffstück 6 in dem Manipulatorarm zwischen dem letzten Glied des Manipulatorarms und einem Werkzeug 8 angeordnet, welches der Manipulatorarm hält.

### Bezugszeichenliste

- 1: Roboter, Cobot
- 2: Werkstück
- 3: Steuerung
- 4: Halteeinrichtung
- 5: Manipulatorarm
- 6: Griffstück
- 6a,6b: Montageflächen
- 7: distales Ende
- 8: Werkzeug
- 9: proximales Ende
- 10: Schalter, Drucktaster
- 11: Linearführung
- 12: erste Drehbewegung
- 13: zweite Drehbewegung
- 14: Kraft auf das Griffstück
- 15: Bewegungsrichtung des Manipulatorarms
- 16: Achse des Griffstücks
- 17: Sensoren, Kraftmesserdose
- 18: Bediener

## Patentansprüche

1. Roboter (1) zum Halten und Bearbeiten eines Werkstücks (2), umfassend
eine Steuerung (3) zum Ansteuern einer Halteeinrichtung (4) und zum Ansteuern eines Manipulatorarms (5); und
einen mehrgliedrigen Manipulatorarm (5), der ein Griffstück (6) aufweist, und wobei der Manipulatorarm (5) dazu eingerichtet ist auf das Griffstück (6) des Manipulatorarms (5) ausgeübte Kräfte zu ermitteln und entsprechende Informationen an die Steuerung (3) zu übertragen,
eine mit der Steuerung (3) informativ verbundene Halteeinrichtung (4) zum Halten des Werkstücks (2), wobei die Halteeinrichtung (4) dazu eingerichtet ist das Werkstück (2) linear oder rotatorisch zu verfahren,
und wobei
die Steuerung (3) dazu eingerichtet ist die Halteeinrichtung (4) oder den Manipulatorarm (5) anzusteuern eine Position des Werkstücks (2) relativ zu dem Manipulatorarm (5) entsprechend der über den Manipulatorarm (5) ermittelten Kräfte linear oder rotatorisch zu verfahren; und
die Steuerung (3) dazu eingerichtet ist, gleichzeitig mit der Ansteuerung der Halteeinrichtung (4) das Griffstück (6) des Manipulatorarms (5) basierend auf den über den Manipulatorarm (5) ermittelten Kräfte linear oder rotatorisch aus einer Ausgangsposition auszulenken.

2. Roboter (1) nach Anspruch 1, wobei der Roboter (1) ein Cobot ist

3. Roboter (1) nach einem der vorherigen Ansprüche, wobei der mehrgliedrige Manipulatorarm (5) an seinem distalen Ende (7) zur Aufnahme eines Werkzeugs (8) zur Bearbeitung des Werkstücks (2) geeignet ist.

4. Roboter (1) nach einem der vorherigen Ansprüche, wobei das Auslenken des Manipulatorarms (5) basierend auf den über den Manipulatorarm (5) ermittelten Kräfte nichtlinear ist.

5. Roboter (1) nach einem der Ansprüche 1 bis 3, wobei das Auslenken des Manipulatorarms (5) basierend auf den über den Manipulatorarm (5) ermittelten Kräfte linear ist.

6. Roboter (1) nach einem der vorherigen Ansprüche, wobei die Steuerung (3) dazu eingerichtet ist den Manipulatorarm (5) anzusteuern oder das proximale Ende des Manipulatorarm (5) entsprechend der über den Manipulatorarm (5) ermittelten Kräfte linear oder rotatorisch zu verfahren.

7. Roboter (1) nach einem der vorherigen Ansprüche, wobei der Manipulatorarm (5) an seinem proximalen Ende (9) relativ zur Halteeinrichtung (4) lösbar festgelegt ist.

8. Roboter (1) nach einem der vorherigen Ansprüche, wobei die Steuerung (3) dazu eingerichtet die Halteeinrichtung (4) anzusteuern die Position des Werkstücks (2) entsprechend der über den Manipulatorarm (5) ermittelten Kräfte linear oder rotatorisch zu verfahren.

9. Roboter (1) nach einem der vorherigen Ansprüche, wobei der Manipulatorarm (5) einen Schalter (10) aufweist.

10. Verfahren zur Steuerung (3) eines Roboters (1) nach einem der vorherigen Ansprüche, umfassend:
Ermitteln von auf das Griffstück (6) des Manipulatorarms (5) ausgeübten Kräften,
Übertragung der entsprechenden Informationen an die Steuerung (3),
Halten des Werkstücks (2) in der Halteeinrichtung (4),
Ansteuern der Halteeinrichtung (4) oder des Manipulatorarms (5) eine Position des Werkstücks (2) relativ zu dem Manipulatorarm (5) entsprechend der über den Manipulatorarm (5) ermittelten Kräfte linear oder rotatorisch zu verfahren, rotatorisches oder lineares Auslenken des Griffstücks (6) des Manipulatorarms (5) gleichzeitig mit der Ansteuerung der Halteeinrichtung (4) basierend auf den über den Manipulatorarm (5) ermittelten Kräften aus einer Ausgangsposition.

11. Verfahren nach Anspruch 10, wobei das Auslenken des Manipulatorarms (5) basierend auf den über den Manipulatorarm (5) ermittelten Kräfte nichtlinear ist.

12. Verfahren nach Anspruch 10, wobei das Auslenken des Manipulatorarms (5) basierend auf den über den Manipulatorarm (5) ermittelten Kräfte linear ist.

13. Speichermedium mit Software, welche einen Roboter (1) steuert, zur Durchführung eines Verfahrens nach einem der Ansprüche 10 bis 12.
